# EUROPEAN PATENT APPLICATION

(11) **EP 4 438 222 A1**
(43) Date of publication of application: **02.10.2024**
(21) Application number: 24165811.1
(22) Date of filing: 25.03.2024
(51) Int. Cl.: B23P 15/26, B21C 37/24, B21J 5/06, F28F 3/04, F28F 21/08, C21D 9/00

(54) **METHOD FOR MANUFACTURING HEAT EXCHANGER**

(30) Priority: 28.03.2023 JP 2023051917
(71) Applicant: Sumitomo Precision Products Co., Ltd., Hyogo 660-0891 (JP)
(72) Inventor: KAWAKAMI, Kazunari, Hyogo, 660-0891 (JP)
(74) Representative: Viering, Jentschura & Partner mbB Patent- und Rechtsanwälte

(57) **Abstract**

A method for manufacturing a heat exchanger (100, 200) includes softening a base material (10, 210) having a predetermined hardness, forming fins (11, 211) by cutting and raising a surface (10a) of a softened base material (10, 210) by skiving, and hardening the base material (10, 210) by performing a heat treatment on the base material (10, 210) with the fins (11, 211) formed thereon.

## Description

### BACKGROUND OF THE INVENTION

### Field of the Invention

The present invention relates to a method for manufacturing a heat exchanger, and more particularly, it relates to a method for manufacturing a heat exchanger including fins formed on the outer surface by skiving. Description of the Background Art

A method for manufacturing a heat exchanger including fins formed on the outer surface by skiving is known.

Japanese Patent Laid-Open No. 2001-156224 discloses a method for manufacturing a heat exchanger manufactured by forming fins on the outer surface of the heat exchanger by skiving. Specifically, Japanese Patent Laid-Open No. 2001-156224 discloses a method for manufacturing a heat exchanger in which fins are formed by cutting and raising a surface of a heat sink material made of aluminum or an aluminum alloy with a Vickers hardness of 40 to 65 by skiving.

However, when fins are formed by skiving a somewhat hard heat sink material (base material) such as aluminum or an aluminum alloy with a Vickers hardness of 40 to 65, it is difficult to cut and raise the fins into a desired shape.

### SUMMARY OF THE INVENTION

One or more aspects of the present invention are directed to providing a method for manufacturing a heat exchanger by which fins having a desired shape can be formed even when a somewhat hard base material is skived.

A method for manufacturing a heat exchanger according to the present invention includes softening a base material having a predetermined hardness, forming fins by cutting and raising a surface of a softened base material by skiving, and hardening the base material by performing a heat treatment on the base material with the fins formed thereon.

### BRIEF DESCRIPTION OF THE DRAWINGS

FIG. 1 is a perspective view schematically showing a heat exchanger according to one or more embodiments.
FIG. 2 is a schematic longitudinal sectional view of the heat exchanger.
FIG. 3 is a schematic view for illustrating the structure of a base material before fins are formed.
FIG. 4 is a schematic view of the base material before fins are formed as viewed from above.
FIG. 5 is a schematic view for illustrating the structure of the base material with a fin forming portion formed thereon.
FIG. 6A is a schematic view for illustrating a step of cutting a surface of the base material by skiving.
FIG. 6B is a schematic view for illustrating a step of forming a plurality of fins on the surface of the base material by skiving.
FIG. 6C is a schematic view for illustrating a step of cutting the base material with the plurality of fins formed on the surface by skiving to a predetermined length.
FIG. 7 is a perspective view schematically showing the base material with the fins formed thereon.
FIG. 8 is a perspective view schematically showing the base material with the fins formed thereon that has been bent.
FIG. 9 is a perspective view schematically showing the base material that has been bent and with predetermined members welded thereto.
FIG. 10 is a flowchart for illustrating a method for manufacturing the heat exchanger.
FIG. 11 is a perspective view schematically showing a heat exchanger according to a modified example.
FIG. 12 is a flowchart for illustrating a method for manufacturing the heat exchanger according to the modified example.

### DESCRIPTION OF THE PREFERRED EMBODIMENTS

One or more embodiments of the present invention are described with reference to the drawings.

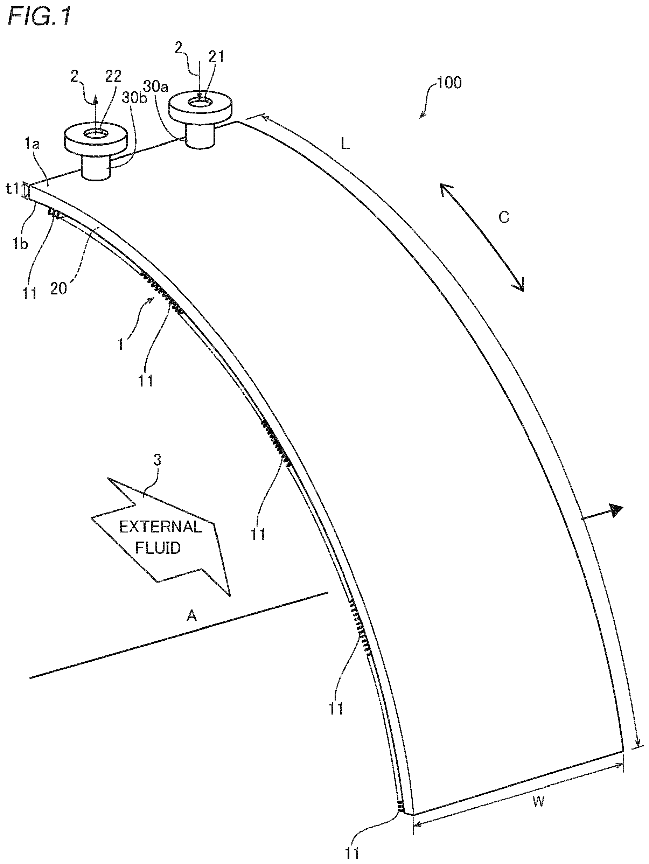

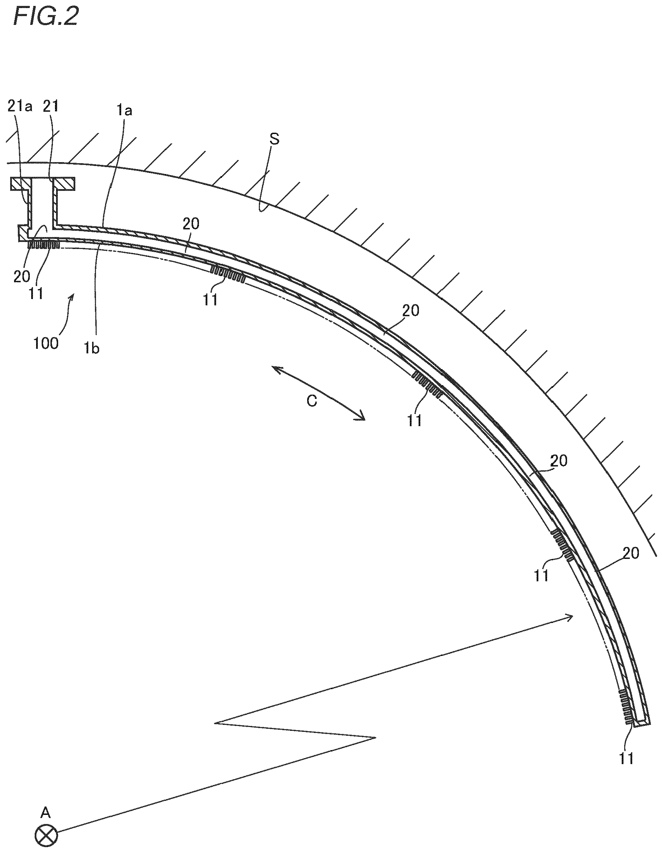

The configuration of a heat exchanger 100 manufactured by a method for manufacturing a heat exchanger according to one embodiment is now described with reference to FIGS. 1 and 2. The heat exchanger 100 according to the embodiment exchanges heat between a fluid 2 flowing inside of the heat exchanger 100 and an external fluid 3 flowing outside of the heat exchanger 100.

Specifically, the heat exchanger 100 according to the embodiment shown in FIG. 1 is a heat exchanger for an aircraft engine, and is installed in the aircraft engine. The heat exchanger 100 is provided as an air-cooled heat exchanger (cooler) that cools the fluid 2 flowing inside by exchanging heat with an airflow (external fluid 3) passing through the aircraft engine. The aircraft engine is a type of engine, such as a gas turbine engine, that generates a propulsive force using air taken from the outside into a cylindrical casing, and a high-speed airflow is generated within the casing. The fluid 2 is oil used in aircraft, such as lubricating oil for the aircraft engine or lubricating oil for a generator driven by the aircraft engine.

Thus, the heat exchanger 100 is configured as a surface cooler for the aircraft engine. The surface cooler is a type of heat exchanger that cools the fluid 2 flowing inside of the heat exchanger 100 by an airflow flowing along fins 11 provided on the outer surface of the heat exchanger 100 having a hollow plate shape. As shown in FIG. 2, the heat exchanger 100 has a curved shape that is curved in the longitudinal direction along a curved surface S formed within the aircraft engine. The curved surface S within the aircraft engine is the inner peripheral surface of a fan casing of the aircraft engine, for example.

The heat exchanger 100 is provided with a length of about 1/n circumference (n is a real number of 1 or more) in the circumferential direction (direction C) along the substantially cylindrical curved surface S. The length of the heat exchanger 100 is about 1/8 of the entire circumference of the curved surface S, for example, but the heat exchanger 100 may have an annular shape that extends over substantially the entire circumference of the curved surface S. The external fluid 3 (airflow) flows along a direction A (see FIG. 1), which is a substantially axial direction (the direction of the rotation axis of a turbine) within the aircraft engine. The curved surface S within the aircraft engine is not necessarily a perfectly cylindrical curved surface, and thus the radius of curvature of the heat exchanger 100 in that case differs depending on the position in the axial direction (direction A).

### Overall Configuration of Heat Exchanger

The overall configuration of the heat exchanger 100 is described. As shown in FIG. 1, the heat exchanger 100 includes a heat exchanger main body 1 with a plurality of fins 11 formed thereon.

As described above, the heat exchanger main body 1 has a curved shape along the curved surface S (see FIG. 2). In the embodiment, the heat exchanger main body 1 has a curved shape along the longitudinal direction. The heat exchanger main body 1 is formed into a curved plate shape as a whole. The heat exchanger main body 1 has a width W, a length L in the circumferential direction (direction C), and a thickness t1. The width W is smaller than the length L, and the thickness t1 is smaller than the length L and the width W.

The heat exchanger main body 1 includes an internal flow path 20, a fluid inlet 21 and a fluid outlet 22 connected to the internal flow path 20, and the plurality of fins 11 formed on the outer surface. Moreover, the heat exchanger main body 1 includes two ports 30a and 30b. First ends of the ports 30a and 30b communicate with the outside of the heat exchanger main body 1, and second ends of the ports 30a and 30b communicate with the internal flow path 20 of the heat exchanger main body 1. In the embodiment, the port 30a functions as the fluid inlet 21. The port 30b functions as the fluid outlet 22. The two ports 30a and 30b are examples of a "predetermined member" in the claims.

As shown in FIG. 2, the internal flow path 20 is a passage through which the fluid 2 flows. Furthermore, the internal flow path 20 is a space formed inside the heat exchanger main body 1. A first end of the internal flow path 20 communicates with the fluid inlet 21, and a second end of the internal flow path 20 communicates with the fluid outlet 22 (see FIG. 1).

As shown in FIG. 1, the fluid inlet 21 and the fluid outlet 22 are fluid passages that open to the outside of the heat exchanger main body 1. Each of the fluid inlet 21 and the fluid outlet 22 is connected to a fluid circuit outside the heat exchanger main body 1. In the embodiment, the fluid inlet 21 and the fluid outlet 22 are arranged at one end of the heat exchanger main body 1 in the longitudinal direction and are aligned in the width direction of the heat exchanger main body 1.

The plurality of fins 11 are provided on a second surface 1b of the heat exchanger main body 1 in the thickness direction. The plurality of fins 11 rise from the second surface 1b. The plurality of fins 11 are arranged along the longitudinal direction of the heat exchanger main body 1. The fins 11 are provided substantially parallel to each other at substantially equal intervals (substantially equal pitches). The plurality of fins 11 extend substantially along the width direction (the axial direction A of the aircraft engine) of the heat exchanger main body 1. In each figure, only portions of the plurality of fins 11 are illustrated, and the remaining portions are omitted by two-dot chain lines. In the embodiment, the fins 11 are not provided on a first surface 1a of the heat exchanger main body 1 in the thickness direction.

### Base Material

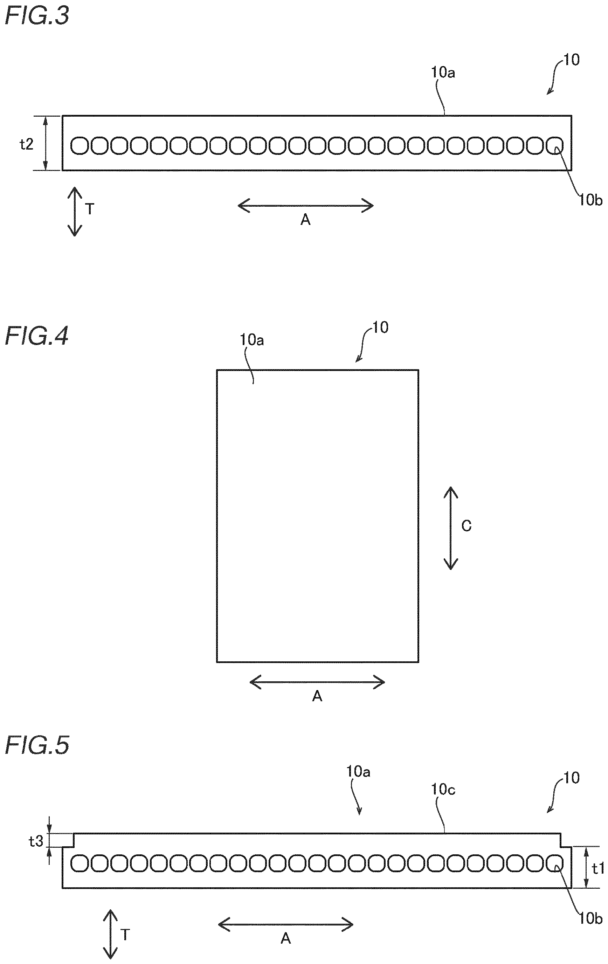

A base material 10 (see FIG. 3) is now described with reference to FIGS. 3 and 4. As shown in FIG. 3, the base material 10 is aluminum or an aluminum alloy having a thickness t2. The thickness t2 is larger than the thickness t1 (see FIG. 1) of the heat exchanger main body 1 (see FIG. 1). Moreover, the base material 10 before being softened has a Vickers hardness of 58 or more (HV). Specifically, the base material 10 before being softened is aluminum or an aluminum alloy having a Vickers hardness of 58 or more. In the embodiment, the base material 10 is an A6000 series aluminum alloy. Specifically, the base material 10 is an A6063 (JIS standards) material. In "JIS H 4100", an A6063 material having a Vickers hardness of 58 or more is defined as a T5 temper material. That is, the base material 10 according to the embodiment is an A6063 material having a hardness comparable to the hardness of a T5 temper material.

As shown in FIG. 3, the base material 10 is an extruded material. Specifically, the base material 10 is a multi-hole tube including a plurality of through-holes 10b extending along the extrusion direction (direction C) of the base material 10. The through-holes 10b function as the internal flow path 20 of the heat exchanger main body 1. The multi-hole tube is formed by extrusion of aluminum or an aluminum alloy. Therefore, the plurality of through-holes 10b as the internal flow path 20 extend linearly from a first end of the multi-hole tube to a second end of the multi-hole tube in a direction (direction C (see FIG. 4)) in which the multi-hole tube extends. In this description, the thickness direction of the base material 10 is defined as a direction T.

As shown in FIG. 4, the multi-hole tube has a rectangular shape as viewed in the direction T. That is, the multi-hole tube is a plate-shaped member having a thickness t2 (see FIG. 3) and including the plurality of through-holes 10b penetrating in the direction C.

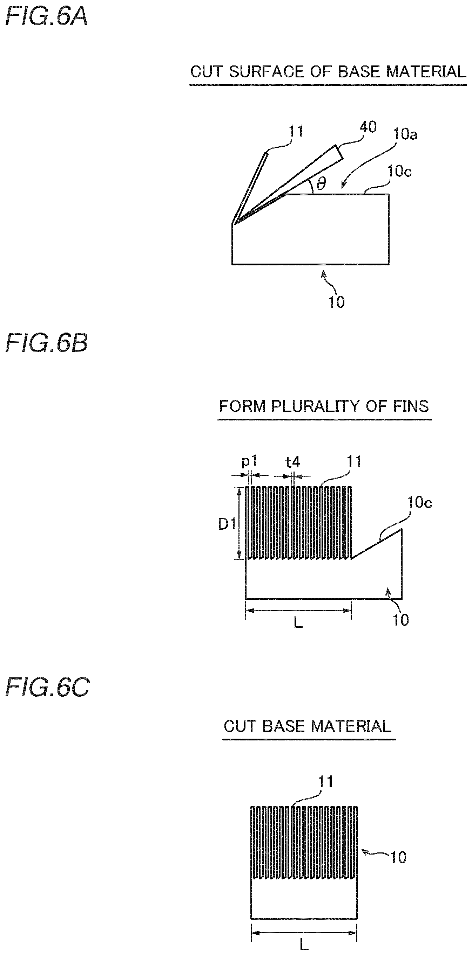

In the embodiment, the fins 11 (see FIG. 1) are formed on a surface 10a of the multi-hole tube (base material 10). In the embodiment, the fins 11 are formed by skiving a fin forming portion 10c. The fin forming portion 10c is formed when the base material 10 is extruded. Alternatively, the fin forming portion 10c may be formed by cutting both ends of the surface 10a of the base material 10 in the direction A. The thickness t2 of the base material 10 is set to be the sum of the thickness t1 of the heat exchanger main body 1 and the thickness t3 of the fin forming portion 10c. The thickness t3 of the fin forming portion 10c is set according to the thickness t4 (see FIG. 6B) of each of the fins 11 and the length D1 (see FIG. 6B) of each of the fins 11.

### Annealing Treatment on Base Material

In the embodiment, as described above, the fins 11 are formed by skiving. Skiving is a processing method for cutting a surface of a material off in slices. In the embodiment, the fins 11 are formed by skiving the fin forming portion 10c formed on the surface 10a of the base material 10.

In the embodiment, the base material 10 is softened by performing an annealing treatment. After the annealing treatment, the surface 10a of the softened base material 10 is cut and raised by skiving to form the fins 11.

In the embodiment, as the annealing treatment, the base material 10 is heated by holding it at a temperature of 400°C to 430°C for 2 to 3 hours.

After the heating of the base material 10 is completed, the base material 10 is cooled to 260°C or less at a rate of 30°C/hr or less, and after the temperature becomes 260°C or less, the base material 10 is naturally cooled to room temperature. The hardness of an A6063 material comparable to the hardness of an O temper material is not specified in the JIS standards. Therefore, based on the tensile strength and hardness of an A6063 material, the hardness of an A6063 material comparable to the hardness of an O temper material is calculated to be a Vickers hardness of a Vickers hardness of less than 40. That is, in the embodiment, the base material 10 is annealed and softened to a Vickers hardness of less than 40.

### Fin Formation by Skiving

A configuration in which the base material 10 is softened by the annealing treatment and then the fins 11 are formed by skiving is now described with reference to FIGS. 6A to 6C. As shown in FIG. 6A, the fin forming portion 10c provided on the surface 10a of the base material 10 is cut by a cutting tool 40 that is inclined at a predetermined angle θ with respect to the surface 10a of the base material 10 that has been softened by the annealing treatment. The angle θ of the cutting tool 40 is set according to the thickness t4 (see FIG. 6B) and the length D1 (see FIG. 6B) of each of the fins 11 to be cut and raised.

Then, the step in FIG. 6A is repeated such that a plurality of fins 11 are cut out on the surface 10a of the base material 10, as shown in FIG. 6B. Thereafter, as shown in FIG. 6C, a plurality of fins 11 are cut out at the fin forming portion 10c corresponding to the length L of the base material 10, and the base material 10 is cut to a predetermined length L. Thus, formation of the fins 11 by cutting and raising the surface 10a of the base material 10 by skiving is completed.

In the embodiment, in the process of forming the fins 11 (the steps in FIGS. 6A to 6C), the surface 10a of the base material 10 is cut and raised by skiving such that each of the fins 11 has a thickness t4 of 0.4 mm or more and 1.0 mm or less, and an interval p1 between the fins 11 is 2.0 mm or more and 4.0 mm or less. In the embodiment, the surface 10a of the base material 10 is skived to form the fins 11 such that the fins 11 extend in a direction perpendicular to a direction (direction C) in which the through-holes 10b (see FIG. 5) of the multi-hole tube extend. Thus, the fins 11 extend along the direction A (see FIG. 1). Therefore, the fins 11 extend in the direction perpendicular to the direction (direction C) in which the through-holes 10b (see FIG. 5) extend. Therefore, the efficiency of heat exchange between the fluid 2 flowing through the through-holes 10b as the internal flow path 20 (see FIG. 2) and the external fluid 3 can be improved.

When the fins 11 are cut and raised by skiving without annealing an extruded material such as a multi-hole tube, depending on a direction in which skiving is performed, the workability of the fins 11 may decrease due to the hardness of the base material 10, and the shape of the fins 11 may not have a desired shape. Therefore, when the fins 11 are cut and raised by skiving without annealing, skiving is performed in a direction along the extrusion direction of the multi-hole tube in order to reduce or prevent a decrease in the workability of the fins 11. On the other hand, in the embodiment, the base material 10 is annealed and softened, and thus workability during cutting out of the fins 11 by skiving can be improved. Therefore, the fins 11 can be cut out by skiving regardless of the extrusion direction in formation of the multi-hole tube. That is, in the embodiment, the direction in which the surface 10a of the multi-hole tube (base material 10) is skived may be along the extrusion direction of the multi-hole tube or in a direction opposite to the extrusion direction.

### Bending of Base Material

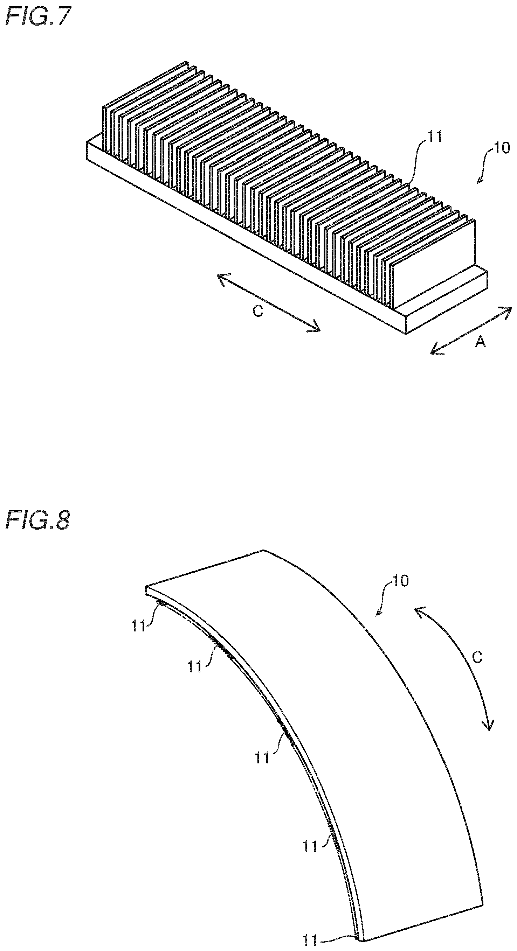

A configuration in which the heat exchanger 100 (see FIG. 1) used as a surface cooler for an aircraft engine is manufactured by bending the base material 10 is now described with reference to FIGS. 7 to 9.

FIG. 7 shows the base material 10 with the plurality of fins 11 formed thereon. In the embodiment, the base material 10 is plate-shaped. Therefore, as shown in FIG. 7, the base material 10 with the fins 11 formed by skiving is also plate-shaped. Therefore, in order to use the base material 10 with the fins 11 formed by skiving as a surface cooler for an aircraft engine, it is necessary to curve the base material 10.

Therefore, as shown in FIG. 8, the base material 10 with the plurality of fins 11 formed thereon is curved along the curved surface S (see FIG. 2) formed within the aircraft engine. In the embodiment, after the base material 10 is annealed and softened and before the base material 10 is hardened to a predetermined hardness by a heat treatment, the base material 10 is bent. That is, the multi-hole tube is curved along the curved surface S within the aircraft engine while the hardness comparable to the hardness of an O temper material is maintained.

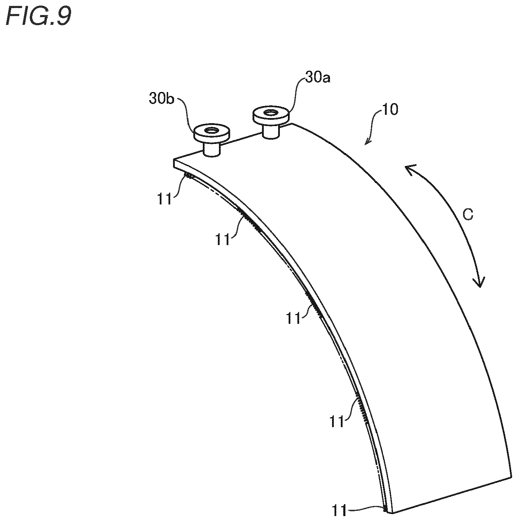

As shown in FIG. 9, after the multi-hole tube is curved and before the multi-hole tube is hardened, the ports 30a and 30b are welded to the multi-hole tube. In addition to the ports 30a and 30b, a member (not shown) for fixing the multi-hole tube to a mounting structure such as a bracket provided on the inner peripheral surface of the aircraft engine is welded to the multi-hole tube. The ports 30a and 30b and the member for fixing the multi-hole tube to the mounting structure such as a bracket provided on the inner peripheral surface of the aircraft engine are welded to the multi-hole tube after the base material 10 is annealed and softened and before the base material 10 is hardened to a predetermined hardness. Hardening by Heat Treatment

In the embodiment, after the plurality of fins 11 are formed on the surface 10a (see FIG. 5) of the base material 10 by skiving, the base material 10 is curved, and predetermined members such as the ports 30a and 30b are joined by welding, the base material 10 is hardened by the heat treatment. The heat treatment to harden the base material 10 according to the embodiment includes an age hardening treatment.

Specifically, the base material 10 that has been softened to a hardness comparable to the hardness of an O temper material is subjected to the age hardening treatment to have a hardness comparable to the hardness of a T5 temper material. More specifically, the base material 10 having a Vickers hardness of 58 or more is annealed and softened to a Vickers hardness of less than 40. Then, in a step of hardening the base material 10, the base material 10 is hardened to a Vickers hardness of 58 or more by age hardening treatment. In the embodiment, the age hardening treatment is performed by holding the base material 10 at a temperature of about 200°C for 8 to 9 hours. Thereafter, necessary processing, a surface treatment, etc. are performed, and the heat exchanger 100 (see FIG. 1) is assembled such that the heat exchanger 100 is manufactured.

### Heat Exchanger Manufacturing Process

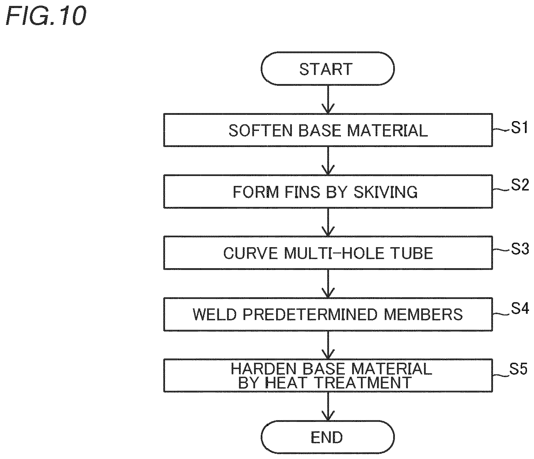

A method for manufacturing the heat exchanger 100 (see FIG. 1) according to the embodiment is now described with reference to FIG. 10.

In step S1, the base material 10 (see FIG. 5) having a predetermined hardness is softened. Specifically, in step S1, the base material 10 is softened by the annealing treatment. In the embodiment, the base material 10 having a hardness comparable to the hardness of a T5 temper material is softened to a hardness comparable to the hardness of an O temper material by the annealing treatment. Furthermore, before the base material 10 is softened in step S1, the fin forming portion 10c is formed on the surface 10a (see FIG. 5) of the base material 10. That is, in step S1, the base material 10 with the fin forming portion 10c formed thereon is annealed and softened.

In step S2, the fins 11 are formed by cutting and raising the surface 10a of the annealed and softened base material 10 by skiving.

In step S3, after the fins 11 are formed and before the multi-hole tube (base material 10) is hardened, the multi-hole tube is curved. Specifically, the multi-hole tube is curved in the longitudinal direction along the curved surface S (see FIG. 2) formed within the aircraft engine.

In step S4, after the multi-hole tube is curved and before the multi-hole tube is hardened, the ports 30a and 30b are welded to the multi-hole tube. Furthermore, in step S4, the member for fixing the multi-hole tube to the mounting structure such as a bracket provided on the inner peripheral surface of the aircraft engine, etc. are also welded.

In step S5, the heat treatment is performed on the base material 10 with the fins 11 formed thereon to harden the base material 10. Thereafter, necessary processing, a surface treatment, etc. are performed, and the process for manufacturing the heat exchanger 100 is terminated.

### Advantageous Effects of The embodiment

According to the embodiment, the following advantageous effects are achieved.

In the method for manufacturing the heat exchanger 100 according to the embodiment, even when the somewhat hard base material 10 is skived, it is possible to skive the base material 10 that has been softened to a hardness suitable for forming the fins 11, and thus workability during cutting and raising of the fins 11 can be improved. Therefore, even when the fins 11 are formed by skiving, the fins 11 can be cut and raised into a desired shape. Consequently, it is possible to provide the method for manufacturing the heat exchanger by which the fins 11 having a desired shape can be formed even when the somewhat hard base material 10 is skived. Furthermore, in the method for manufacturing the heat exchanger 100 according to the present invention, it is possible to harden the softened base material 10 after the fins 11 are formed, and thus the hardness of the base material 10 with the fins 11 formed thereon can be restored to the predetermined hardness. Consequently, when the heat exchanger 100 including the fins 11 having a desired shape by skiving is manufactured, it is possible to form the heat exchanger 100 (fins 11) into the predetermined hardness, and thus the mechanical strength required for the heat exchanger 100 can be ensured.

According to the embodiment, as described above, the softening the base material 10 includes annealing the base material 10, and in annealing the base material 10, the base material 10 is annealed and softened to a Vickers hardness of less than 40. Accordingly, the base material 10 is softened to a Vickers hardness of less than 40, and thus when the fins 11 are formed by skiving the somewhat hard base material 10, the base material 10 can be softened to a hardness that allows the fins 11 to be cut and raised into a desired shape. Consequently, it is possible to improve the workability of the somewhat hard base material 10 such that the fins 11 can be cut and raised into a desired shape, and thus even when the fins 11 are formed by skiving the somewhat hard base material 10, the fins 11 can be easily cut and raised into a desired shape.

According to the embodiment, as described above, in annealing the base material 10, the base material 10 is annealed and softened to a hardness comparable to the hardness of an O temper material. Accordingly, the base material 10 can be reliably softened to a Vickers hardness of less than 40. Consequently, the base material 10 can be reliably softened to a hardness that allows the fins 11 to be cut and raised into a desired shape.

According to the embodiment, as described above, in hardening the base material 10, the heat treatment to harden the base material 10 includes the age hardening treatment. Accordingly, the base material 10 that has been softened to a Vickers hardness of less than 40 can be easily hardened to the predetermined hardness.

According to the embodiment, as described above, the base material 10 before being softened is aluminum or an aluminum alloy having a Vickers hardness of 58 or more, in annealing the base material 10, the base material 10 having a Vickers hardness of 58 or more is annealed and softened to a Vickers hardness of less than 40, and in hardening the base material 10, the base material 10 is hardened to a Vickers hardness of 58 or more by the age hardening treatment. Accordingly, after the base material 10 of aluminum or an aluminum alloy, which has a hardness comparable to the hardness of a T5 temper material with a Vickers hardness of 58 or more, is softened to a hardness comparable to the hardness of an O temper material with a Vickers hardness of less than 40, the fins 11 can be cut and raised by skiving, and thus as compared with a configuration in which the fins 11 are formed on the base material 10 having a hardness comparable to the hardness of a T5 temper material, the fins 11 having a desired shape can be cut and raised. Furthermore, the base material 10 with the fins 11 formed thereon by skiving is hardened to a Vickers hardness of 58 or more by the age hardening treatment, and thus the hardness of the base material 10 with the fins 11 formed thereon can be restored to a hardness comparable to the hardness of a T5 temper material. Consequently, it is possible to provide the method for manufacturing the heat exchanger by which the fins 11 having a desired shape can be formed while the mechanical strength comparable to the mechanical strength of a T5 temper material is ensured even when the fins 11 are formed by skiving the base material 10 of aluminum or an aluminum alloy having a hardness comparable to the hardness of a T5 temper material.

According to the embodiment, as described above, the base material 10 is an extruded material and is the multi-hole tube including the plurality of through-holes 10b extending along the extrusion direction (direction C) of the base material 10, and the method for manufacturing the heat exchanger 100 further includes curving the multi-hole tube after the fins 11 are formed and before the multi-hole tube is hardened. Accordingly, the base material 10 is softened by performing the annealing treatment, and thus the base material 10 can be easily curved. Consequently, a curved heat exchanger 100, such as the heat exchanger 100 used as a surface cooler for an aircraft engine, can be easily manufactured.

According to the embodiment, as described above, the method for manufacturing the heat exchanger 100 further includes welding the ports 30a and 30b to the multi-hole tube after the multi-hole tube is curved and before the multi-hole tube is hardened. Accordingly, the ports 30a and 30b are welded to the multi-hole tube before the multi-hole tube is hardened, and thus even when a welding heat affected portion is softened during welding, the welding heat affected portion can also be hardened when the multi-hole tube is hardened. Consequently, it is possible to reduce or prevent a decrease in the mechanical strength of a welded portion due to the welding heat affected portion softened when the ports 30a and 30b are welded.

According to the embodiment, as described above, in forming the fins 11, the surface 10a of the base material 10 is cut and raised by skiving such that each of the fins 11 has a thickness t4 of 0.4 mm or more and 1.0 mm or less, and the interval p1 between the fins 11 is 2.0 mm or more and 4.0 mm or less. Accordingly, when a heat exchanger in which the fins 11 having a thin thickness t4 of 0.4 mm or more and 1.0 mm or less are arranged at a narrow interval p1 of 2.0 mm or more and 4.0 mm or less is manufactured, the fins 11 can be easily cut and raised into a desired shape by softening the base material 10 by performing the annealing treatment.

### Example (Effect Confirmation Experiment)

In order to confirm the effects of the embodiment described above, the following experiment was conducted. First, a base material 10 having a Vickers hardness of 77 was annealed and softened to a Vickers hardness of 28. Then, a surface 10a (fin forming portion 10c) of the base material 10 that had been softened to a Vickers hardness of 28 was cut and raised to form fins 11 such that the thickness t3 of each of the fins 11 was 0.5 mm, and an interval p1 between the fins 11 was 2.1 mm.

In this manner, it has been confirmable that the fins 11 having a desired shape are formed on the base material 10 having a Vickers hardness of 77 by annealing and softening the base material 10 having a Vickers hardness of 77 to a Vickers hardness of 28, and then forming the fins 11 by skiving.

Furthermore, the base material 10 with the fins 11 formed thereon was subjected to an age hardening treatment such that the hardness of the base material 10 with the fins 11 formed thereon was restored to a predetermined hardness. Thus, when the heat exchanger 100 including the fins 11 having a desired shape by skiving is manufactured, it is possible to set the hardness of the heat exchanger 100 (fins 11) to the predetermined hardness, and thus the mechanical strength required for the heat exchanger 100 can be ensured. Thus, it has been confirmable through the experiment that the effects described in the embodiment can be achieved.

### Modified Examples

The embodiment and Example disclosed this time must be considered as illustrative in all points and not restrictive.

The present invention may alternatively be applied to a heat exchanger other than a surface cooler as long as the heat exchanger includes fins 11 formed by skiving. The heat exchanger according to the present invention does not need to be installed along a curved surface S within an aircraft engine. The heat exchanger may be provided on a moving body other than an aircraft, or may be provided on a fixed device other than a moving body, for example.

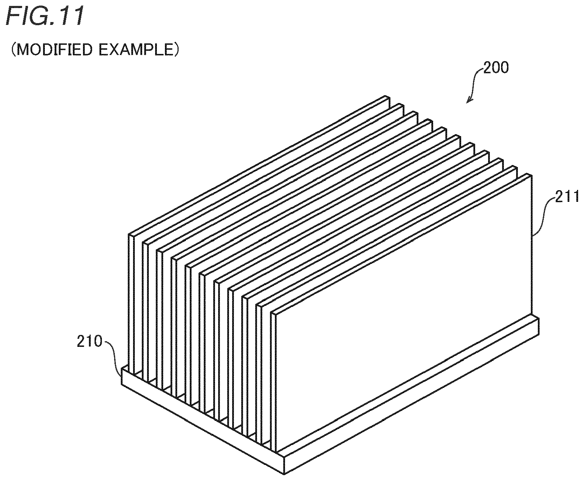

For example, as in a modified example shown in FIG. 11, a non-curved heat exchanger 200 may be manufactured by forming fins 211 on a plate-shaped base material 210 by skiving. The base material 210 is a plate-shaped aluminum or aluminum alloy without through-holes. Furthermore, the non-curved heat exchanger 200 is a heat sink provided on a surface of an electronic device to exchange heat between heat emitted from the electronic device and an external fluid, for example.

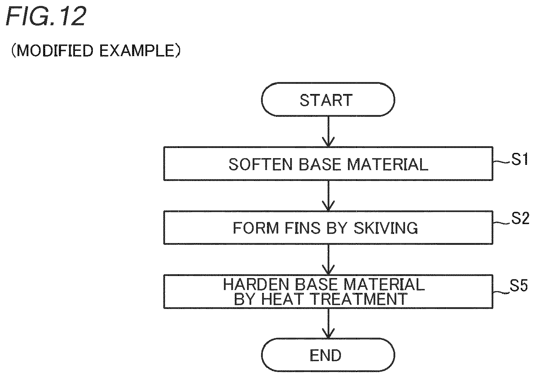

A method for manufacturing the heat exchanger 200 (see FIG. 11) according to the modified example is now described with reference to FIG. 12. The same or similar steps as those in the method for manufacturing the heat exchanger 100 (see FIG. 1) according to the above embodiment are denoted by the same reference numerals, and detailed description thereof is omitted.

In step S1, the base material 210 (see FIG. 11) is softened by an annealing treatment.

In step S2, the fins 211 (see FIG. 11) are formed by skiving the base material 210 that has been softened by the annealing treatment.

In step S5, the base material 210 with the fins 211 formed thereon is hardened by a heat treatment. Specifically, the base material 210 with the fins 211 formed thereon is hardened by an age hardening treatment. Thereafter, necessary processing, a surface treatment, etc. are performed, and the process for manufacturing the heat exchanger 200 is terminated.

In the present invention, the hardness of the base material 10 after being softened does not matter as long as the hardness of the base material 10 is comparable to the hardness of an O temper material (a Vickers hardness of less than 40).

While in hardening the base material 10, after the base material 10 is heated, the heated base material 10 is cooled to 260°C or less at a rate of 30°C/hr or less, and then the base material 10 is hardened by the age hardening treatment in which the base material 10 is naturally cooled until the temperature of the base material 10 reaches room temperature in the aforementioned embodiment, the present invention is not limited to this. As long as the base material 10 can be hardened to the predetermined hardness, the age hardening treatment conditions may be other than the above conditions.

In the present invention, the base material 10 may alternatively be hardened by a heat treatment other than the age hardening treatment, such as quenching or tempering. Any heat treatment may be used as long as the base material 10 can be hardened to the predetermined hardness by the heat treatment.

The ports 30a and 30b may alternatively be welded to the curved base material 10 with the fins 11 formed thereon that has been heat-treated to be hardened. However, when the ports 30a and 30b are welded to the hardened base material 10, the mechanical strength of the welded portion decreases due to the welding heat affected portion softened during welding. Therefore, it is preferable to harden the base material 10 by performing the heat treatment on the base material 10 after the ports 30a and 30b are welded to the curved base material 10 with the fins 11 formed thereon.

Although the thickness t4 of each of the fins 11 is preferably 0.4 mm or more and 1.0 mm or less, and the interval p1 between the fins 11 is preferably 2.0 mm or more and 4.0 mm or less, the fins 11 may be formed to have any thickness t4 and any interval p1 therebetween.

In the present invention, the fins 11 may alternatively be formed by skiving only on the first surface 1a of the heat exchanger main body 1, or the fins 11 may alternatively be formed by skiving on both the second surface 1b and the first surface 1a of the heat exchanger main body 1.

For example, the width W of the heat exchanger main body 1 may alternatively be larger than the length L.

The type of base material 10 does not matter as long as the base material 10 is aluminum or an aluminum alloy that is softened by the annealing treatment and hardened by the heat treatment.

The base material 10 may be softened by any process as long as the base material 10 is softened by a heat treatment.

## Claims

1. A method for manufacturing a heat exchanger (100, 200), the method comprising:
softening a base material (10, 210) having a predetermined hardness;
forming fins (11, 211) by cutting and raising a surface (10a) of a softened base material (10, 210) by skiving; and
hardening the base material (10, 210) by performing a heat treatment on the base material (10, 210) with the fins (11, 211) formed thereon.

2. The method for manufacturing a heat exchanger (100, 200) according to claim 1, wherein
the softening the base material (10, 210) includes annealing the base material (10, 210); and
in the annealing the base material (10, 210), the base material (10, 210) is annealed and softened to a Vickers hardness of less than 40.

3. The method for manufacturing a heat exchanger (100, 200) according to claim 2, wherein in the annealing the base material (10, 210), the base material (10, 210) is annealed and softened to a hardness comparable to a hardness of an O temper material.

4. The method for manufacturing a heat exchanger (100, 200) according to claim 3, wherein in the hardening the base material (10, 210), the heat treatment to harden the base material (10, 210) includes an age hardening treatment.

5. The method for manufacturing a heat exchanger (100, 200) according to claim 4, wherein
the base material (10, 210) before being softened is aluminum or an aluminum alloy having a Vickers hardness of 58 or more;
in the annealing the base material (10, 210), the base material (10, 210) having a Vickers hardness of 58 or more is annealed and softened to a Vickers hardness of less than 40; and
in the hardening the base material (10, 210), the base material (10, 210) is hardened to a Vickers hardness of 58 or more by the age hardening treatment.

6. The method for manufacturing a heat exchanger (100) according to claim 1, wherein
the base material (10) is an extruded material, and is a multi-hole tube including a plurality of through-holes (10b) extending along an extrusion direction of the base material (10); and
the method for manufacturing a heat exchanger (100) further comprises curving the multi-hole tube after the fins (11) are formed and before the multi-hole tube is hardened.

7. The method for manufacturing a heat exchanger (100) according to claim 6, further comprising:
welding a predetermined member (30a, 30b) to the multi-hole tube after the multi-hole tube is curved and before the multi-hole tube is hardened.

8. The method for manufacturing a heat exchanger (100) according to claim 1, wherein in the forming the fins (11), the surface (10a) of the base material (10) is cut and raised by skiving such that each of the fins (11) has a thickness (t4) of 0.4 mm or more and 1.0 mm or less, and an interval (p1) between the fins (11) is 2.0 mm or more and 4.0 mm or less.
